# EUROPÄISCHE PATENTANMELDUNG

(11) **EP 1 713 273 A1**
(43) Veröffentlichungstag der Anmeldung: **18.10.2006**
(21) Anmeldenummer: 06007865.6
(22) Anmeldetag: 13.04.2006
(51) Int. Cl.: H04N 7/14, G10L 15/24

(54) **Verfahren und Kommunikationsendgerät für die Steuerung von Videotelephonie mittels Detektion von Mundbewegungen**

(30) Priorität: 15.04.2005 DE 102005017532
(71) Anmelder: BenQ Corporation, Gueishan Taoyuan 333 (TW); BenQ Mobile GmbH & Co. OHG, 81667 Munich (DE)
(72) Erfinder: Hülskemper, Michael, 46569 Hünxe (DE)
(74) Vertreter: Epping - Hermann - Fischer

(57) **Zusammenfassung**

Die Erfindung betrifft ein Verfahren zum Steuern von Videotelephonie bei einem Kommunikationsendgerät mit einem Lautsprecher (L) zum Unterstützen eines Freisprechbetriebes und einem Mikrophon (M) zur Erfassung von Sprachsignalen eines Benutzers des Kommunikationsendgerätes, wobei eine Übertragung eines von dem Mikrophon (M) aufgrund eines empfangenen Sprachsignals generierten Audiosignals zur Unterdrückung von Störgeräuschen im Wesentlichen dann frei geschaltet wird, wenn Sprachsignale von dem Benutzer vorliegen, wobei im Rahmen der Videotelephonie von dem Kommunikationsendgerät erfasste Bildsignale, die einer Wiedergabe des Benutzers entsprechen, auf das Vorliegen einer Mundbewegung des Benutzers ausgewertet werden und beim Erfassen einer Mundbewegung das von dem Mikrophon (M) des Kommunikationsendgerätes generierte Audiosignal zur Übertragung frei geschaltet wird.

## Beschreibung

Die Erfindung bezieht sich auf ein Verfahren zum Steuern von Videotelephonie bei einem Kommunikationsendgerät mit einem Lautsprecher zum Unterstützen eines Freisprechbetriebes und einem Mikrophon zur Erfassung von Sprachsignalen eines Benutzers des Kommunikationsendgerätes, wobei eine Übertragung eines von dem Mikrophon aufgrund eines empfangenen Sprachsignals generierten Audiosignals zur Unterdrückung von Störgeräuschen im Wesentlichen dann frei geschaltet wird, wenn Sprachsignale von dem Benutzer vorliegen. Außerdem bezieht sich die Erfindung auf ein zur Durchführung des Verfahrens ausgeführtes Kommunikationsendgerät.

Ein Verfahren der oben beschriebenen Art ist im Stand der Technik bekannt und läuft prinzipiell bei einer Videotelephonieverbindung zwischen zwei Kommunikationsendgeräten, die auch mobil sein können auf beiden beteiligten Geräten ab. Eine Problematik, die sich bei der Videotelephonie ergibt, besteht darin, dass sich durch eine erhebliche Entfernung des Benutzers des Kommunikationsendgerätes zu dem Mikrophon erhebliche Störgeräusche ergeben können, beispielsweise durch weitere Personen, die sich in demselben Raum wieder Benutzer des Kommunikationsendgerätes befinden. Aus diesem Grund ist ein Vollduplex-Betrieb bei der Videotelephonie nicht möglich. Es wird versucht, Maßnahmen zu treffen, mit denen sichergestellt wird, dass vom Mikrophon generierte Audiosignale nur dann über die Kommunikationsverbindung zu einem Gesprächspartner übertragen werden, wenn tatsächlich interessierende Nutzsignale vorliegen. Diese interessierenden Nutzsignale sind die Sprachsignale des Benutzers.

Aus diesem Grund wird im Stand der Technik bei Kommunikationsendgeräten eine sog. "Pegelwaage" zum Einsatz gebracht, deren Aufgabe es ist, ein Verhältnis zwischen einem aktuellen Lautsprechersignal und einem aktuellen Mikrophonsignal zu bilden. Wenn der Benutzer spricht, wird insbesondere beim Einsatz von Richtmikrophonen davon ausgegangen, dass ein erheblich größeres Mikrophonsignal vorliegt als in dem Fall von Störgeräuschen in Abwesenheit von Sprachsignalen des Benutzers. Daher erreicht bei Vorliegen von Sprache des Benutzers das Verhältnis einen vorbestimmten Schwellwert und überschreitet diesen ggf., so dass eine Freischaltung des Mikrophonsignals zur Übertragung an den Gesprächspartner erfolgen kann.

Die Verwendung der Pegelwaage führt in der Praxis jedoch immer noch zu Schwierigkeiten. Insbesondere in dem Fall, wenn der Benutzer gerade selber spricht und daher das Lautsprechersignal auf Seiten seines Gesprächspartners einen hohen Signalpegel aufweist, kann es vorkommen, dass der Gesprächspartner spricht, dessen Mikrophonsignal jedoch trotzdem nicht frei geschaltet wird, weil das Verhältnis noch nicht den zum Freischalten vorgesehenen Schwellwert erreicht hat.

Dies hat zur Folge, dass der Benutzer seinen Gesprächspartner zwar sprechen sieht, Sprachsignale jedoch nicht an den Benutzer, im Einzelnen sein Kommunikationsendgerät, übertragen werden.

Ausgehend hiervon liegt der Erfindung die Aufgabe zugrunde, ein Verfahren zum Steuern von Videotelephonie bei einem Kommunikationsendgerät sowie ein dafür ausgelegtes Kommunikationsendgerät zu schaffen, bei denen eine Freischaltung des Mikrophonsignals zuverlässiger von Statten geht.

Hinsichtlich des Verfahrens wird diese Aufgabe bei dem eingangs beschriebenen Verfahren dadurch gelöst, dass im Rahmen der Videotelephonie von dem mobilen Kommunikationsendgerät erfasste Bildsignale, die einer Wiedergabe des Benutzers entsprechen, auf das Vorliegen einer Mundbewegung des Benutzers ausgewertet werden und beim Erfassen einer Mundbewegung das von dem Mikrophon des Kommunikationsendgerätes generierte Audiosignal zur Übertragung frei geschaltet wird.

Das Verfahren basiert somit darauf, Bilder, die bei der Videotelephonie naturgemäß von dem Benutzer des Kommunikationsendgerätes aufgenommen werden, zielgerichtet so auszuwerten, dass das Mikrophonsignal dann frei geschaltet wird, wenn der Benutzer spricht. Auslösendes Ereignis für die Freischaltung des Mikrophonsignals ist das Feststellen einer Mundbewegung des Benutzers. In anderem Zusammenhang sind hier im Stand der Technik bereits Verfahren beschrieben worden, mit deren Hilfe beispielsweise im Zusammenhang mit Lippenlesen, Mundbewegungen detektiert werden können. Die Anforderungen an das Feststellen der Mundbewegung sind im vorliegenden Fall jedoch geringer, da keine Auswertung auf von dem Benutzer abgegebene Laute stattfinden muss. Vielmehr reicht die Feststellung an sich, dass die Mundbewegung stattfindet. In diesem Zusammenhang wird auf den Fachartikel "Audio-Visual-Talking Face Detection" von Li et al. verwiesen, erschienen in Proceeding of 2003 IEEE International Conference on Multimedia and Expo (ICME), Baltimore, MD, July, 2003.

Selbstverständlich kann die Nicht-Feststellung einer Mundbewegung auf Seiten des Benutzers auch als auslösendes Ereignis für eine Unterbrechung der Übertragung des Mikrophonsignals über die Kommunikationsverbindung verwendet werden.

Es kann von Vorteil sein, wenn die Freischaltung des von dem Mikrophon generierten Audiosignals außerdem abhängig von einem Pegelverhältnis zwischen einem an dem Lautsprecher anliegenden Signal und dem Mikrophonsignal erfolgt. In dieser Weise werden zwei Informationen zum Freischalten des Mikrophonsignals herangezogen, nämlich einerseits die Feststellung der Mundbewegung und andererseits, wie bereits im Stand der Technik bekannt, das Pegelverhältnis. Hier können sich insofern Vorteile ergeben, dass der Benutzer Mundbewegungen ausführt, ohne tatsächlich Sprache zu artikulieren. In einem solchen Fall kann ein vorbestimmtes Verhältnis für den Pegel des Lautsprechersignals zum Pegel des Mikrophonsignals festgelegt sein, oberhalb dessen trotz Feststellung der Mundbewegung keine Freischaltung des Mikrophonsignals erfolgt.

Die oben angegebene Aufgabe wird hinsichtlich des Kommunikationsendgerätes gelöst durch ein Kommunikationsendgerät zur Unterstützung von Videotelephonie, mit einer Kamera zum Erzeugen von Bildsignalen eines Benutzers des Kommunikationsendgerätes, einem Mikrophon zur Aufnahme von Sprachsignalen, die von dem Benutzer herrühren, und einem Lautsprecher zur Wiedergabe von empfangenen Audiosignalen, wobei eine Steuereinrichtung vorgesehen ist, die das Mikrophonsignal im Wesentlichen dann frei schaltet, wenn der Benutzer des Kommunikationsendgerätes spricht, dadurch gekennzeichnet, dass die Steuereinrichtung eine Bildauswerteeinrichtung umfasst, der von der Kamera erzeugte Bilder zugeleitet werden und die das Vorliegen einer Mundbewegung des Benutzers erfasst, und die Steuereinrichtung das Mikrophonsignal bei Erfassen einer Mundbewegung des Benutzers zur Übertragung frei schaltet.

Dabei erhält die Steuereinrichtung alle erforderlichen Eingangssignale dafür, um aufgrund einer festgestellten Mundbewegung des Benutzers eine Freischaltung des Mikrophonsignals herbeizuführen. Dabei wird die Auswertung mit Hilfe der Bildauswerteinrichtung bevorzugt in Software realisiert werden.

Es ist bevorzugt, dass das Kommunikationsendgerät eine Pegelwaage aufweist, die ein Verhältnis zwischen einem Lautsprechersignal und einem Mikrophonsignal liefert, und die Steuereinrichtung das Mikrophonsignal zur Übertragung frei schaltet, abhängig von dem von der Pegelwaage gelieferten Verhältnis.

Die Vorteile des Vorsehens der Pegelwaage entsprechen denjenigen, wie sie oben anhand einer bevorzugten Ausführungsform des Verfahrens erläutert sind.

Die Erfindung wird nachfolgend anhand von Ausführungsbeispielen noch näher erläutert. Es zeigen:
- Figur 1: ein Blockschaltbild eine Kommunikationsendgerätes zur Unterstützung von Videotelephonie gemäß einer ersten Ausführungsform und
- Figur 2: ein Blockschaltbild eines Kommunikationsendgerätes zur Unterstützung von Videotelephonie gemäß einem zweiten Ausführungsbeispiel.

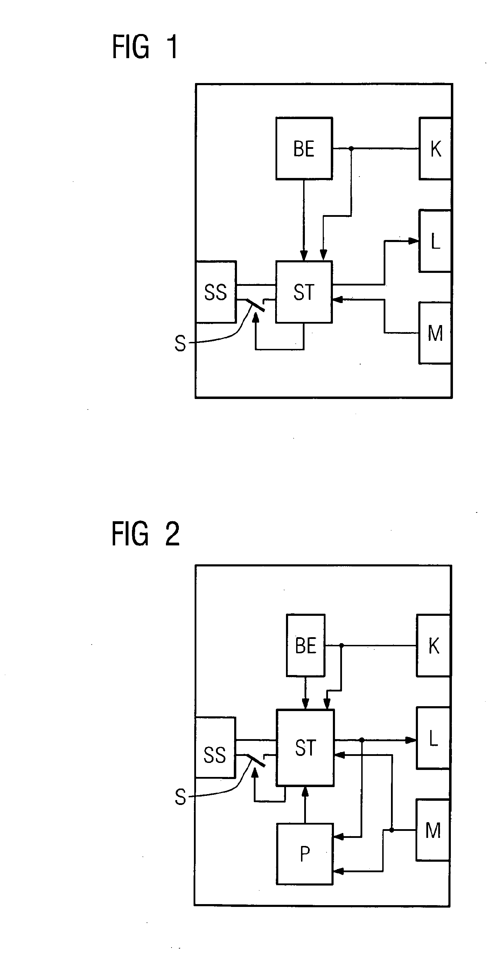

Das in Figur 1 schematisch dargestellte Kommunikationsendgerät, bei dem es sich beispielsweise um ein Festnetztelefon oder auch ein Mobiltelefon oder ein anderes zu Kommunikationszwecken geeignetes Gerät, das Videotelephonie unterstützt, handeln kann, weist eine zentrale Steuereinrichtung ST auf, welche Funktionalitäten des Kommunikationsendgerätes überwacht und steuert. Die Steuereinrichtung ST kann Teil einer Basisbandsignalverarbeitung eines Mobiltelefons sein.

Bei einer Benutzung des Kommunikationsendgerätes im Rahmen der Videotelephonie kommen drei Hardwarekomponenten zur Übertragung von Bild und Ton zum Einsatz, nämlich eine Kamera K, die bei der Videotelephonie typischer Weise Bilder eines Benutzers des Kommunikationsendgerätes liefet, ein Lautsprecher L zur Wiedergabe empfangener Sprachsignale ggf. im Freisprechbetrieb und ein Mikrophon M zur Aufnahme von Sprachsignalen des Benutzers. Das Mikrophon M kann beispielsweise als Richtmikrophon ausgestaltet sein.

Die Steuereinrichtung ST ist mit einer Schnittstelle SS verbunden, über die eine Kommunikationsverbindung zur Durchführung von Videotelephonie aufbaubar ist. In der Figur 1 sind zwei Verbindungsleitungen zwischen der Steuereinrichtung ST und der Schnittstelle SS gezeigt, von denen eine, die für eine Übertragung des Mikrophonsignals von dem Mikrophon M vorgesehen ist, einen steuerbaren Schalter S aufweist.

Die in den Figuren dargestellte zweite Leitung zwischen der Steuereinrichtung ST und der Schnittstelle SS versinnbildlicht eine Übertragungsstrecke für sämtliche anderen über die Schnittstelle SS auszusendenden oder zu empfangenen Daten. Die Leitung zur Übertragung des Mikrophonsignals ist lediglich aus Veranschaulichungsgründen in den Figuren besonders herausgestellt.

Es ist hervorzuheben, dass bei anderen Ausführungsformen das Mikrophon M und die Kamera K, aber auch der Lautsprecher L ggf. als externe Komponenten vorgesehen sein können. Hier ist als Beispiel ein Personalcomputer oder ein Festnetztelefon als Kommunikationsendgerät zu nennen, an den über geeignete Schnittstellen eine Kamera, ein Lautsprecher und ein Mikrophon angeschlossen werden können.

Bei der Videotelephonie besteht das Ziel des Verfahrens zur Unterstützung derselben darin, eine Übertragung eines von dem Mikrophon M generierten Audiosignals über die Schnittstelle SS nur dann zuzulassen, wenn eine Mundbewegung eines Benutzers des Kommunikationsendgerätes erfasst wird. Dies geht wie folgt von Statten: Die Kamera K liefert fortlaufend Bilder des Benutzers, insbesondere seines Kopfes. Diese Bilder werden einer Bildauswerteeinrichtung BE zugeführt, deren Aufgabe es ist, festzustellen, ob aktuell eine Mundbewegung des Benutzers vorliegt. Die Bildauswerteeinrichtung BE ist so programmiert, dass sie bei einem Übergang von einem Zeitraum ohne Mundbewegung zu einem Zeitraum mit Vorliegen von Mundbewegungen ein Steuersignal an die Steuereinrichtung ST aussendet, welche daraufhin den Schalter S frei schaltet. Dabei ist zu erwähnen, dass der Schalter S nicht notwendiger Weise zwischen Steuereinrichtung ST und Schnittstelle SS angeordnet sein muss. Ziel ist ausschließlich sicher zustellen, dass das Mikrophonsignal mit Hilfe des Schalters S freischaltbar ist. Daher kann der Schalter S beispielsweise auch in der Zuleitung von dem Mikrophon M zur Steuereinrichtung ST untergebracht sein.

Das Feststellen des Vorliegens einer Mundbewegung des Benutzers in der Bildauswerteeinrichtung BE kann nach bekannten Verfahren erfolgen, wie sie beispielsweise in dem oben zitierten Fachartikel beschrieben sind.

Wenn die Bildauswerteinrichtung BE feststellt, dass das Vorliegen von Mundbewegungen des Benutzers nicht weiter feststellbar ist, sendet sie ebenso ein Steuersignal an die Steuereinrichtung ST aus, die daraufhin den Schalter S unterbricht. Alternativ zu der Darstellung in Figur 1 kann der Schalter S auch direkt von der Bildauswerteeinrichtung BE gesteuert sein, wobei dann auf eine Verbindung zwischen der Auswerteeinrichtung BE und der Steuereinrichtung ST verzichtet werden kann.

In der Figur 2 ist eine weitere Ausführungsform eines Kommunikationsendgerätes für Videotelephonie dargestellt, wobei gleiche Komponenten mit denselben Bezugszeichen wie in Figur 1 bezeichnet sind.

Die Ausführungsform eines Kommunikationsendgerätes nach Figur 2 unterscheidet sich denjenigen nach Figur 1 dadurch, dass zusätzlich eine Pegelwaage P vorgesehen ist, welche als Eingangsignale das aktuell an dem Lautsprecher L anliegende Signal und das aktuell von dem Mikrophon M erzeugte Audiosignal erhält. In der Pegelwaage P wird ein Verhältnis aus diesen beiden Eingangssignalen gebildet, wobei das sich ergebende Verhältnis in Beziehung gesetzt wird zu einem vorgegebenen Verhältnis zwischen Lautsprechersignal und Mikrophonsignal, bei dem der Schalter S freizugeben ist. Dies wird dann der Fall sein, wenn eine Intensität des Mikrophonsignals vergleichsweise groß gegenüber der Intensität des Lautsprechersignals ist.

Die Steuereinrichtung ST erhält somit zum Steuern des Schalters S zwei Eingangssignale, nämlich eines von der Bildauswerteeinrichtung BE zum Feststellen von Mundbewegungen des Benutzers und ein zweites von der Pegelwaage P aufgrund des beschriebenen Intensitätsvergleichs. Mit Hilfe eines geeigneten Algorithmus kann die Steuereinrichtung ST daraufhin ein Freischalten bzw. Unterbrechen des Schalters S nach Bedarf bewirken.

Die zweite, dargestellte Ausführungsform hat den Vorteil, dass selbst bei stummen Mundbewegungen des Benutzers eine Unterbrechung des Schalters S beibehalten werden kann. Der Problematik der Erfassung einer stummen Mundbewegung durch die Bildauswerteeinrichtung BE könnte außerdem bei Bedarf dadurch begegnet werden, dass das Vorliegen einer Mundbewegung über einen vorbestimmten Zeitraum durchgehend gegeben sein muss. Dieser Zeitraum wird so bemessen sein, dass einerseits ein möglichst zeitnahes Freischalten des Schalters S bei Auftreten einer Mundbewegung erfolgt und andererseits sichergestellt ist, dass keine stumme Mundbewegung vorliegt.

## Patentansprüche

1. Verfahren zum Steuern von Videotelephonie bei einem Kommunikationsendgerät mit einem Lautsprecher (L) zum Unterstützen eines Freisprechbetriebes und einem Mikrophon (M) zur Erfassung von Sprachsignalen eines Benutzers des Kommunikationsendgerätes,
wobei
eine Übertragung eines von dem Mikrophon (M) aufgrund eines empfangenen Sprachsignals generierten Audiosignals zur Unterdrückung von Störgeräuschen im Wesentlichen dann frei geschaltet wird, wenn Sprachsignale von dem Benutzer vorliegen,
**dadurch gekennzeichnet,**
**dass** im Rahmen der Videotelephonie von dem Kommunikationsendgerät erfasste Bildsignale, die einer Wiedergabe des Benutzers entsprechen, auf das Vorliegen einer Mundbewegung des Benutzers ausgewertet werden und beim Erfassen einer Mundbewegung das von dem Mikrophon (M) des Kommunikationsendgerätes generierte Audiosignal zur Übertragung frei geschaltet wird.

2. Verfahren nach Anspruch 1,
**dadurch gekennzeichnet,**
**dass** die Freischaltung des von dem Mikrophon (M) generierten Audiosignals außerdem abhängig von einem Pegelverhältnis zwischen einem an dem Lautsprecher (L) anliegenden Signal und dem Mikrophonsignal erfolgt.

3. Kommunikationsendgerät zur Unterstützung von Videotelephonie, mit einer Kamera (K) zum Erzeugen von Bildsignalen eines Benutzers des Kommunikationsendgerätes, einem Mikrophon (M) zur Aufnahme von Sprachsignalen, die von dem Benutzer herrühren, und einem Lautsprecher (L) zur Wiedergabe von empfangenen Audiosignalen,
wobei
eine Steuereinrichtung (ST) vorgesehen ist, die das Mikrophonsignal im Wesentlichen dann frei schaltet, wenn der Benutzer des Kommunikationsendgerätes spricht,
**dadurch gekennzeichnet,**
**dass** die Steuereinrichtung (ST) eine Bildauswerteeinrichtung (BE) umfasst, der von der Kamera (K) erzeugte Bilder zugeleitet werden und die das Vorliegen einer Mundbewegung des Benutzers erfasst, und
die Steuereinrichtung (ST) das Mikrophonsignal bei Erfassen einer Mundbewegung des Benutzers zur Übertragung frei schaltet.

4. Kommunikationsendgerät nach Anspruch 3,
**dadurch gekennzeichnet,**
**dass** es eine Pegelwaage (P) aufweist, die ein Verhältnis zwischen einem Lautsprechersignal und einem Mikrophonsignal liefert, und die Steuereinrichtung (ST) das Mikrophonsignal zur Übertragung frei schaltet, abhängig von dem von der Pegelwaage (P) gelieferten Verhältnis.

5. Kommunikationsendgerät nach einem der Ansprüche 1 bis 4,
**dadurch gekennzeichnet,**
**dass** der Lautsprecher (P) und/oder das Mikrophon (M) und/oder die Kamera (K) integriert sind.

6. Kommunikationsendgerät nach einem der Ansprüche 1 bis 4,
**dadurch gekennzeichnet,**
**dass** der Lautsprecher (L) und/oder das Mikrophon (M) und/oder die Kamera (K) jeweils über Schnittstellen angeschlossen sind.
